(19) Europäisches Patentamt
European Patent Office
Office européen des brevets

(11) Numéro de publication : 0 443 929 B1

# (12) FASCICULE DE BREVET EUROPEEN

(45) Date de publication du fascicule du brevet : **30.11.94 Bulletin 94/48**

(51) Int. Cl.$^5$ : **H01M 10/54,** H01M 6/52

(21) Numéro de dépôt : **91400418.9**

(22) Date de dépôt : **18.02.91**

## (54) Procédé de destruction des piles électriques usagées et de récupération de différents constituants.

(30) Priorité : **19.02.90 FR 9001955**

(43) Date de publication de la demande : **28.08.91 Bulletin 91/35**

(45) Mention de la délivrance du brevet : **30.11.94 Bulletin 94/48**

(84) Etats contractants désignés : **AT BE CH DE DK ES FR GB GR IT LI LU NL SE**

(56) Documents cités :
**EP-A- 0 069 117**
**EP-A- 0 284 135**
**EP-A- 0 287 540**
**PATENT ABSTRACTS OF JAPAN, vol. 11, no. 143 (E-504)[2590], 9 mai 1987; & JP-A-61 281 467 (KIRESUTO GIKEN K.K.) 11-12-1986**

(73) Titulaire : **Zouari, Yasmine-Hassen**
**19, Rue Sylvain Vigneras**
**F-92380 Garches (Hauts de Seine) (FR)**

(72) Inventeur : **Zouari, Yasmine-Hassen**
**19, Rue Sylvain Vigneras**
**F-92380 Garches (Hauts de Seine) (FR)**

(74) Mandataire : **Cabinet Pierre HERRBURGER**
**115, Boulevard Haussmann**
**F-75008 Paris (FR)**

EP 0 443 929 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un procédé de destruction de piles électriques usagées et de récupération de différents constituants tels que des sels et des métaux, en particulier des métaux toxiques tels que le mercure.

Les piles du commerce sont composées d'éléments étroitement assemblés dans des unités très compactes ; elles ont pour rôle de produire du courant par la mise en application des lois de l'électrochimie.

Il existe actuellement de très nombreux types de piles parmi lesquelles les plus courantes sont les piles dites "alcalines" au manganèse et contenant du mercure.

Lorsqu'elles sont usagées, de telles piles sont généralement mises au dépôt à l'air libre dans des décharges ; un tel stockage n'est pas sans danger pour l'environnement : en effet, sous l'action des eaux de pluie, les piles usagées, même si elles restent généralement entières, ont tendance après un certain temps à laisser échapper les métaux lourds qu'elles contiennent.

Parallèlement, lorsque elles sont brûlées dans le cadre de l'incinération des ordures ménagères, les piles sont détruites, et, leurs composants se trouvent diffusés dans l'environnement, entraînant là encore des risques de pollution.

Des procédés de recupération des composants des piles usagées sont décrits par EP-A- 284 135 et EP-A- 69 117.

La présente invention a pour objet un procédé du type dit "technologie propre" permettant de détruire les piles électriques usagées, et de récupérer parallèlement différents constituants de celles-ci, tels que des sels et des métaux, en particulier des métaux toxiques, par exemple le mercure.

Selon l'invention, ce procédé est caractérisé en ce que :

- on casse les piles par broyage de manière à obtenir un mélange broyé formé d'éléments présentant une dimension inférieure à environ 1 cm,
- on tamise le mélange broyé de façon à le subdiviser en une poudre et en un granulé,
- on traite le granulé par flottation de façon à le subdiviser en une fraction lourde et en une fraction légère,
- on rassemble la poudre et la liqueur de flottation préalablement recueillie et on traite le mélange de poudres ainsi obtenu à l'aide d'acide sulfurique,
- on filtre le mélange de poudres ainsi traité de manière à séparer un gâteau de filtration d'une solution de filtration,
- on traite la fraction lourde obtenue à la suite de l'étape de flottation en milieu sulfo-nitrique de manière à la subdiviser en une solution d'attaque et en une fraction insoluble,
- on rassemble la solution de filtration et la solution d'attaque en une solution acide que l'on traite par du cuivre métallique de façon à précipiter les métaux plus électropositifs que le cuivre pouvant être présents dans la solution, notamment le mercure et le cas échéant l'argent et/ou par électro déposition,
- et on récupère les métaux, notamment le mercure précipité.

On peut être conduit pour finir le traitement par le cuivre à effectuer une électro déposition du mercure.

Ce procédé peut bien entendu être adapté à tous les types de piles actuellement sur le marché et le traitement des piles alcalines auquel on se référera plus particulièrement dans la suite de cet exposé ne doit être considéré qu'à titre d'exemple et ne saurait correspondre à une limitation de l'invention.

Les premières étapes du procédé conforme à l'invention correspondent à une séparation mécanique et physique des différents constituants des piles.

Lors du broyage préalable, qui peut être mis en oeuvre dans différents dispositifs connus en eux mêmes, il est essentiel de s'assurer que toutes les piles ont bien été cassées, de manière à obtenir un mélange broyé présentant une densité apparente d'environ 1, et constitué de morceaux métalliques ou plastiques présentant une dimension inférieure au cm.

Suivant une autre caractéristique de l'invention, avant de tamiser le mélange broyé, on sépare les parties métalliques magnétiques que l'on envoie, après nettoyage, à un dispositif de refonte des ferrailles.

Cette séparation peut être effectuée très simplement à l'aide d'un électro-aimant ; après dépoussiérage et lavage, les parties métalliques obtenues sont exemptes de toute pollution toxique, et peuvent donc être directement refondues.

Après séparation des parties métalliques, on dispose d'une masse broyée composée d'un mélange hétérogène de papiers, cartons, morceaux de zinc, de plastique, de graphite et d'une poudre noire relativement fine qui contient la quasi totalité du mercure présent dans les piles.

Suivant une autre caractéristique de l'invention, l'étape de tamisage, permettant de séparer cette poudre d'un granulé est mise en oeuvre à l'aide d'un tamis dont la maille est environ comprise entre 1 et 2 mm.

Dans le cas particulier du traitement des piles alcalines, on obtient ainsi environ 630 kg de poudre par tonne de piles traitées. Cette poudre est ensuite soumise à une attaque chimique permettant d'extraire le mercure et les autres métaux lourds ; celle-ci sera décrite plus en détail dans la suite de cet exposé.

Suivant une autre caractéristique de l'invention, l'étape de flottation est mise en oeuvre à l'aide d'une liqueur de flottation constituée par une solution d'acide sulfurique dans l'eau à environ 40 % en poids ayant une densité de l'ordre de 1,4.

Cette étape permet de recueillir une fraction légère, une fraction lourde, ainsi qu'une liqueur de flottation contenant la fraction de poudre ayant adhéré au granulé lors du tamisage ; pour cette raison, et comme on le verra également plus en détail dans la suite de cet exposé, cette liqueur est traitée conjointement à la poudre en vue de récupérer le mercure et les métaux lourds.

Suivant une autre caractéristique de l'invention, on écume, lave avec une solution acide, notamment d'acide sulfurique, et sèche la fraction légère avant de l'incinérer.

Après traitement, cette fraction, qui est constituée de cartons, papiers et plastiques est totalement exempte de toxiques métalliques, et peut donc directement être incinérée.

La fraction lourde est quant à elle constituée de morceaux de zinc, de graphite, et de différents fils et clous en alliages de cuivre. Le traitement de cette fraction en milieu sulfo-nitrique permet de dissoudre le zinc et de recueillir des morceaux de graphite et de plastique exempts de métaux toxiques et pouvant donc être directement récupérés.

Le tableau 1 rassemble à titre d'exemple les masses des différentes fractions obtenues suite à la mise en oeuvre de cette première partie du procédé conforme à l'invention, dans le cas particulier du traitement de piles alcalines.

TABLEAU 1

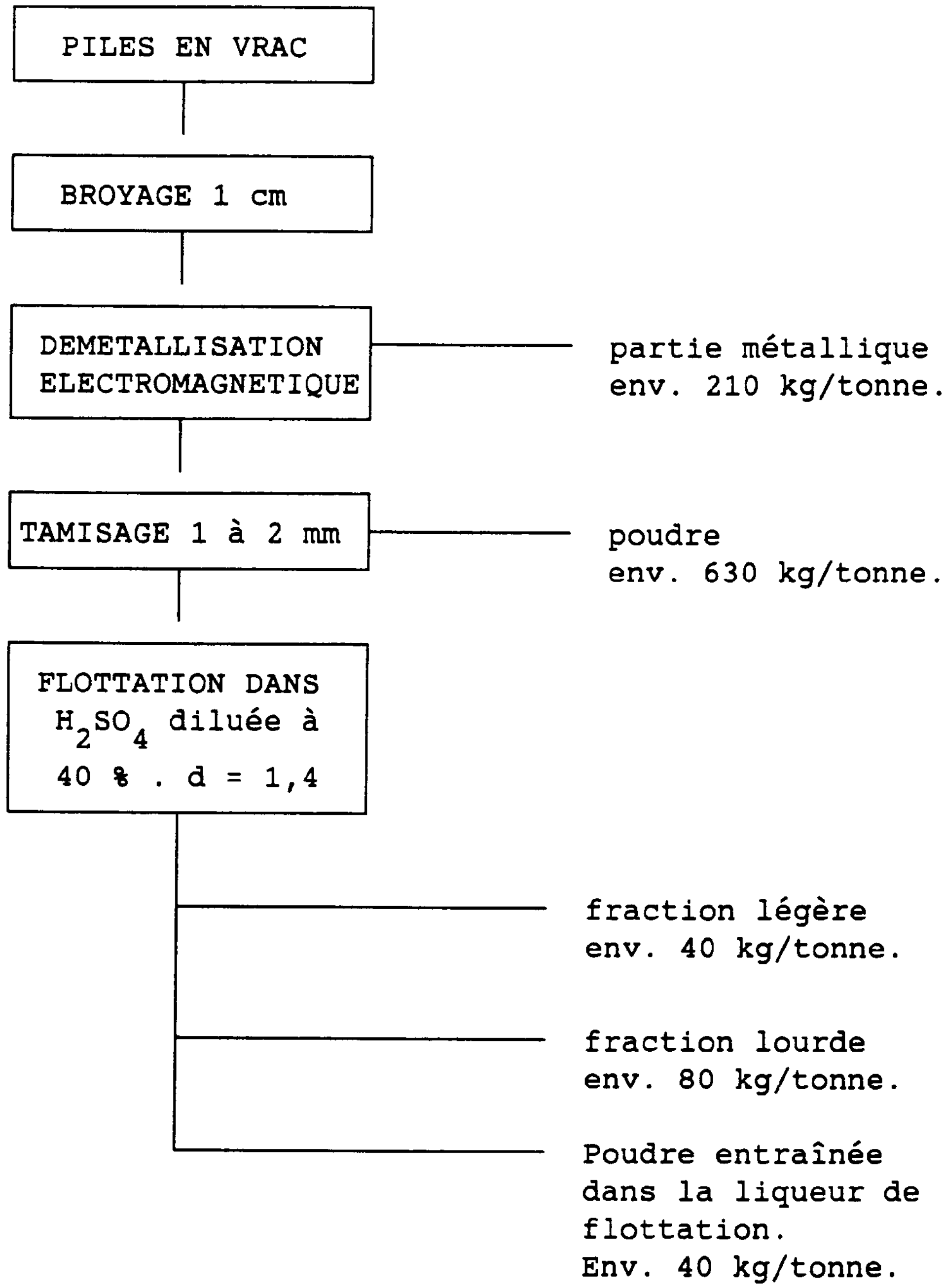


Suivant une autre caractéristique de l'invention, préalablement à son traitement à l'aide d'acide sulfurique, conjointement avec la liqueur de flottation, on lave la poudre à l'eau et on recueille une solution de lavage basique que l'on traite le cas échéant de façon à récupérer la potasse.

Selon les lots de piles traités, la poudre obtenue à l'issue du tamisage contient de l'ordre de 5000 à 10 000 ppm de mercure et a une composition qui est environ la suivante :

- 20 % de zinc métal en poudre ou sous forme saline,
- 6 % de potasse (KOH),
- 35 % de bioxyde de manganèse ($MnO_2$)
- 39 % de charbon actif et autres constituants ($NH_4$, métaux lourds divers).

Ce lavage préalable à l'eau sert à extraire la potasse et les sels solubles (chlorures de zinc, d'ammonium etc...) qui sont rassemblés dans la solution de lavage.

Cette solution, qui peut en outre contenir des traces de métaux lourds, et dans laquelle on observe une décantation lente d'hydroxydes qui précipitent au refroidissement peut être rejetée de différentes manières :

De par son caractère fortement basique, elle peut servir à la neutralisation des eaux de ruissellement de l'usine.

Elle peut être neutralisée à l'acide sulfurique de manière à permettre de recueillir les sulfates de potassium et d'ammonium formés en vue d'une revalorisation agricole après traitement des traces de métaux lourds (décantation/filtration puis passage sur résines échangeuses d'ions).

Elle peut être simplement évaporée de façon à récupérer la potasse ou d'autres sels si aucun emploi de revalorisation ne s'avère possible.

Suivant une autre caractéristique de l'invention, on met en oeuvre le traitement du mélange de poudres à l'acide sulfurique en au moins deux étapes, à savoir une première étape de traitement à température ambiante par une solution d'acide sulfurique à environ 40 % et une seconde étape de traitement à chaud par de l'acide sulfurique concentré, le gâteau de filtration obtenu après filtration à l'issue de la première étape de traitement étant soumis à un lavage, et les solutions de filtration obtenues à l'issue des deux étapes de traitement étant rassemblées.

Lors de la première étape de traitement, on utilise au moins en partie la liqueur de flottation provenant de l'étape de flottation ; le mélange de poudres est alors laissé en contact avec la solution d'acide sulfurique pendant environ 24 heures.

Après filtration et lavage à l'eau on recueille une poudre humide titrant encore entre 1000 et 3000 ppm de mercure, mais, débarrassée du zinc qui a été dissout ainsi qu'une partie du bioxyde de manganèse.

Lors de la seconde étape de traitement, on peut le cas échéant ajouter un peu d'acide nitrique à l'acide sulfurique concentré en vue de parfaire la dissolution du bioxyde de manganèse et d'améliorer la désorption du mercure sur le charbon actif. Cette seconde étape de traitement est généralement mise en oeuvre à une température de l'ordre de 100°C et dure environ 2 heures.

Après filtration et lavage, on recueille une poudre d'aspect charbonneux contenant encore 150 à 500 ppm de mercure.

Conformément à l'invention, ces attaques acides peuvent être prolongées et reproduites aussi longtemps que nécessaire suivant la qualité des lots traités : il est essentiel d'arriver à solubiliser au maximum le mercure et à contrarier l'adsorption naturelle de ce métal (et des autres métaux lourds) sur le charbon actif, afin d'aboutir en fin de traitement à une poudre ne laissant pas de mercure lixivier.

Par ailleurs, et conformément à l'invention, les solutions de filtration obtenues à l'issue des différentes étapes de traitement sont rassemblées et traitées d'une manière qui sera décrite plus en détail dans la suite de cet exposé, afin de permettre la récupération de différents constituants.

Le gâteau de filtration finalement obtenu peut, soit, si ses caractéristiques correspondent aux réglementations, directement être mis en décharge, soit, dans le cas contraire, être traité par chauffage à environ 900°C pendant une durée de l'ordre de 2 heures de manière à obtenir un résidu pulvérulent ou aggloméré, voire vitrifié, ne titrant plus que quelques ppm de mercure et restant totalement neutre à la lixiviation. Dans ces conditions, il est bien entendu nécessaire de recueillir les fumées et de les soumettre à un traitement approprié de condensation/lavage.

Le tableau 2 ci-dessous rassemble les caractéristiques des fractions obtenues suite aux différentes étapes de traitement de la poudre après tamisage dans le cas particulier du traitement de piles alcalines ; comme il a déjà été indiqué, il ne s'agit bien entendu là que d'un exemple qui ne doit en aucune manière être considéré comme étant limitatif de l'invention ; de plus, les quantités d'acide consommées et les quantités d'eau de lavage sont variables ainsi que les températures.

TABLEAU 2

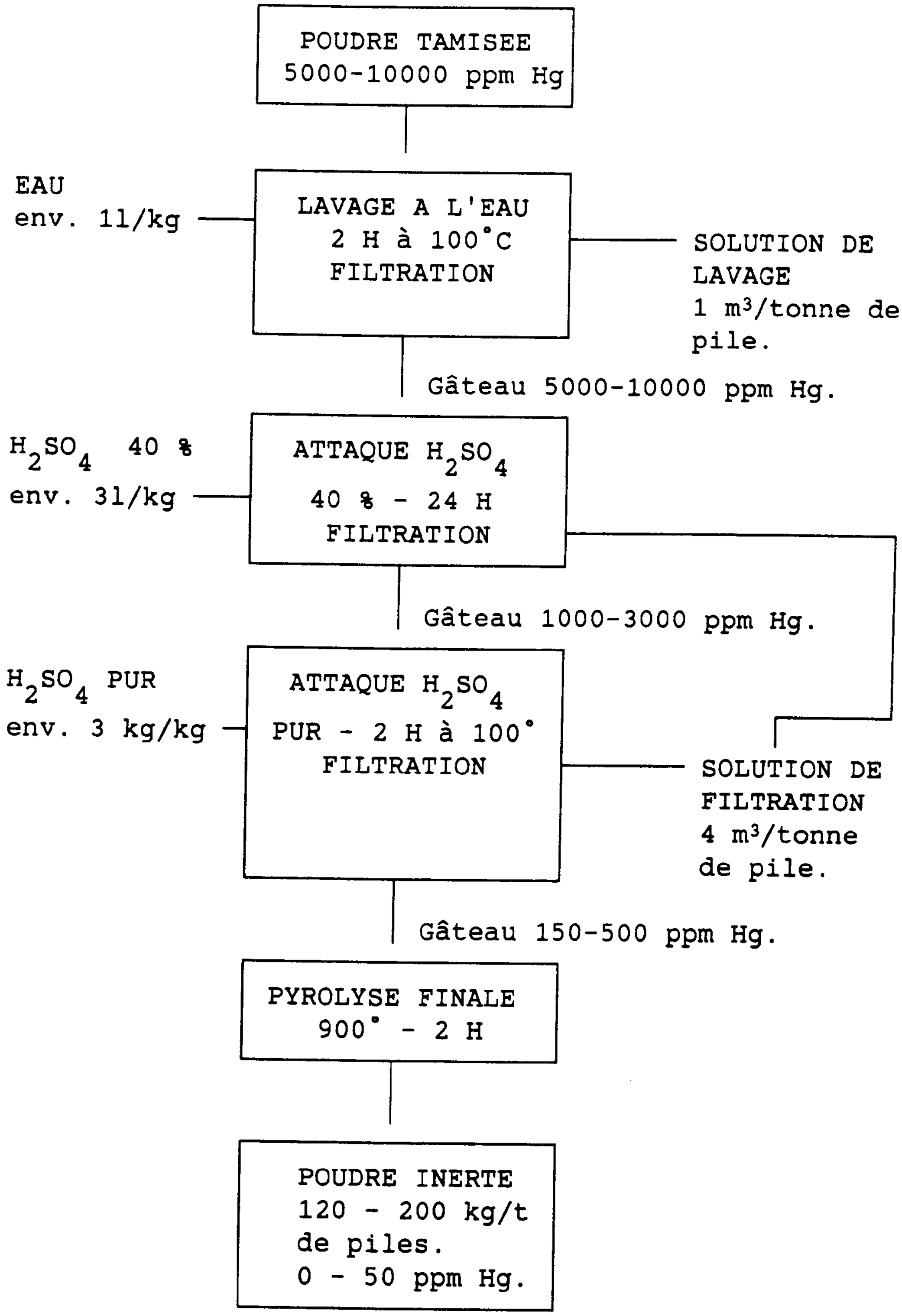


Par ailleurs, et conformément à l'invention la solution acide formée par mélange de la solution de filtration et de la solution d'attaque contient en moyenne entre 500 et 1000 mg par litre de mercure sous forme de $Hg^{++}$.

Le traitement de cette solution par le cuivre entraîne la précipitation du mercure et des métaux plus électropositif que le cuivre, tandis que ce dernier se dissout dans la solution selon la réaction :

$$Hg^{++} + Cu^{\circ} \longrightarrow Hg^{\circ}\downarrow + Cu^{++}$$

Il s'agit là d'une réaction couramment utilisée en hydrométallurgie et connue sous le nom de réaction de cémentation : elle permet de récupérer du mercure natif et de l'argent qui peut éventuellement se trouver à l'état de trace.

La durée du contact entre la solution acide et le cuivre détermine le taux d'extraction de celui-ci ; on peut ainsi facilement réduire la teneur en mercure de la solution jusqu'à moins de 10 mg par litre.

Le mercure ainsi précipité peut être récupéré et affiné par lavage acide ou par distillation.

A l'issue de ce traitement de "démercurisation" la solution acide a en moyenne la composition suivante :

- $ZnSO_4$ : 110 g/l
- $MnSO_4$ : 95 g/l
- $H_2SO_4$ : 290 g/l
- Cu, Pb, Cd, Fe : quelques dizaines de mg/l

Ce traitement peut être "peaufiné" par une extraction du mercure au moyen d'une électrolyse.

L'invention prévoit également de traiter cette solution de manière à permettre la récupération du manganèse et du zinc, et la régénération de l'acide sulfurique.

A cet effet, et suivant une autre caractéristique de l'invention, après traitement par le cuivre et séparation des métaux électro-positifs, on soumet la solution acide à une électrolyse afin de recueillir du bioxyde de manganèse dans le compartiment anodique, et on concentre la solution ainsi traitée de façon à précipiter le zinc sous forme de sulfate heptahydraté.

Au cours de cette électrolyse :

- au compartiment anodique, le manganèse $Mn^{++}$ s'oxyde en $MnO_4^{--}$ qui se décharge sous forme de bioxyde $MnO_2$. $SO_4^{--}$ se trouve parallèlement libéré,
- au compartiment cathodique, le pH très acide empêche le dépôt de zinc, mais le cuivre se dépose sur la cathode. On a également un dégagement d'hydrogène par suite de l'hydrolyse de l'eau.

A l'issue de cette électrolyse, on recueille une solution contenant en moyenne 110 g/l de $ZnSO_4$ et 350 g/l de $H_2SO_4$.

Il ne reste alors plus qu'à concentrer cette solution jusqu'à ce qu'elle titre environ 60 % en acide sulfurique, de manière à permettre la précipitation du zinc sous forme de sulfate heptahydraté que l'on extrait alors en cristallisoir avant de recycler la solution acide en tête du procédé.

Le sulfate de zinc ainsi obtenu peut être soit commercialisé, soit redissout, si la teneur en métaux lourds venant le souiller le rend impropre à la commercialisation, puis électrolysé à pH 4-6 en vue de recueillir le zinc et les métaux lourds (Cd, Pb) qui peuvent le souiller.

Selon une première variante de l'invention, avant son traitement à l'aide d'acide sulfurique conjointement avec la liqueur de flottation, on fait subir à la poudre une dissolution anodique en milieu alcalin en l'introduisant dans le compartiment anodique d'une cellule d'électrolyse séparée en deux compartiments par un diaphragme poreux et on la soumet à une électrolyse, notamment dans une solution alcaline de sulfate d'ammonium de façon à séparer le manganèse présent dans la poudre, qui reste dans le compartiment anodique du zinc qui migre dans le compartiment cathodique, ces deux éléments étant ensuite envoyés séparément à l'étape de traitement à l'aide d'acide sulfurique.

Pour effectuer l'électrolyse, on utilise un électrolyseur à plaque muni d'un diaphragme permettant la circulation de l'électrolyte, et à fortiori des ions, mais pas de la poudre. L'anode employé est en un matériau insoluble et inattaquable tel que par exemple le titane ruthénie et est enfoncé dans la poudre.

La poudre, qui est constituée essentiellement de charbon, de zinc et de manganèse, est bonne conductrice de l'électricité. Sous l'effet du courant d'électrolyse, le zinc migre vers la cathode, et tend donc à s'épuiser dans le compartiment anodique ; le charbon continue néanmoins à assurer la conductivité. Ainsi, toute la masse de la poudre se comporte en fait comme une anode, et, le zinc ainsi que les autres métaux lourds subissent une dissolution, ce qui n'est le cas ni de l'électrode, ni du charbon étant donné qu'ils sont insolubles, ni du manganèse qui est trop peu soluble en milieu alcalin.

Lorsqu'environ 95 % du zinc a migré vers la cathode, l'anode est recouverte d'une très fine pellicule d'oxyde de manganèse susceptible de chuter au fond de la cuve lorsque l'on secoue cette électrode.

Le zinc ainsi que les autres métaux qui migrent vers la cathode qui peut être constituée d'une simple plaque en acier inoxydable, se détachent d'eux mêmes et tombent également au fond de la cuve, sous forme de poudre.

Après filtration du contenu du compartiment cathodique, les boues de zinc et autres métaux tels que le mercure peuvent être transférées à l'étape d'attaque sulfurique et reprendre le chemin normal sus-mentionné jusqu'à la cémentation.

A leur tour, les boues contenues dans le compartiment anodique (charbon, manganèse et métaux lourds restants) peuvent subir l'attaque sulfurique et la suite normale du traitement.

Cette variante de l'invention permet d'obtenir une dissolution très aisée du zinc et autres métaux dans l'acide sulfurique à température ambiante. De même, le temps de dissolution du manganèse est ramené à environ 2 heures à une température de 80°C.

Par ailleurs, cette variante présente l'avantage de permettre de séparer le zinc du manganèse et de les envoyer séparément à l'attaque sulfurique, ce qui pallie à l'inconvénient de leur attaque simultanée. Cette attaque simultanée provoque en effet un dégagement d'hydrogène consécutif à la réaction de l'acide sur le zinc et d'oxygène consécutif à la réaction de l'acide sur le manganèse, ce qui conduit à des risques d'explosition.

Selon une seconde variante de l'invention, on soumet la fraction lourde obtenue à l'issue de l'étape de flottation à une dissolution anodique en milieu alcalin de façon à transférer le zinc présent dans cette fraction vers la cathode où il se dépose sous la forme d'une poudre immédiatement soluble dans l'acide sulfurique.

Pour effectuer cette réaction, on utilise un électrolyte du même type que celui mis en oeuvre dans le cadre de la première variante, notamment une solution alcaline de sulfate d'ammonium.

L'anode, en un métal insoluble et inattaquable, déployée de façon à comporter des trous d'environ un millimètre, revêt avantageusement la forme d'un panier dans lequel la fraction lourde peut être déversée en continu.

Au cours de la dissolution anodique, les métaux tels que le zinc, le cuivre et le mercure présents dans cette fraction, migrent vers la cathode.

Après un certain temps de réaction, on extrait le panier et l'on enlève les morceaux de graphite et de plastique n'ayant pas été séparés lors de la phase de flottation.

Le zinc et autres métaux qui ont migré vers la cathode se déposent sous forme de poudre au fond du compartement cathodique et sont extraits par pompage et filtration.

L'avantage de cette variante de l'invention est lié au fait que le zinc et autres métaux extraits du compartiment cathodique sous forme de poudre sont immédiatement solubles dans l'acide sulfurique sans adjonction d'acide nitrique, ce qui évite le mélange de deux acides et facilite le stockage et le recyclage de l'acide.

Il est à noter que la dissolution anodique, bien que faisant appel à la technique de l'électrolyse, est différente en ce sens, que, dans une électrolyse, le corps à électrolyser se trouve déjà dissous dans l'électrolyte alors que dans la dissolution anodique, c'est le passage du courant qui provoque la dissolution du corps.

## Revendications

1. Procédé de destruction de piles électriques usagées et de récupération de différents constituants tels que des sels et des métaux, en particulier des métaux toxiques tels que le mercure, procédé caractérisé en ce que :
   - on casse les piles par broyage de manière à obtenir un mélange broyé formé d'éléments présentant une dimension inférieure à environ 1 cm,
   - on tamise le mélange broyé de façon à le subdiviser en une poudre et en un granulé,
   - on traite le granulé par flottation de façon à le subdiviser en une fraction lourde et en une fraction légère,
   - on rassemble la poudre et la liqueur de flottation préalablement recueillie et on traite le mélange de poudres ainsi obtenu à l'aide d'acide sulfurique,
   - on filtre le mélange de poudres ainsi traité de manière à séparer un gâteau de filtration d'une solution de filtration,
   - on traite la fraction lourde obtenue à la suite de l'étape de flottation en milieu sulfo-nitrique de manière à la subdiviser en une solution d'attaque et en une fraction insoluble,
   - on rassemble la solution de filtration et la solution d'attaque en une solution acide que l'on traite par du cuivre métallique de façon à précipiter les métaux plus électropositifs que le cuivre pouvant être présents dans la solution, notamment le mercure et le cas échéant l'argent et/ou par électro déposition,
   - et on récupère les métaux, notamment le mercure précipité.

2. Procédé selon la revendication 1, caractérisé en ce que, après traitement par le cuivre et séparation des métaux électropositifs, on soumet la solution acide à une électrolyse afin de recueillir du bioxyde de manganèse dans le compartiment anodique, et on concentre la solution ainsi traitée de façon à précipiter le zinc sous forme de sulfate heptahydraté.

3. Procédé selon l'une quelconque des revendications 1 et 2, caractérisé en ce que, avant de tamiser le mélange broyé, on sépare les parties métalliques magnétiques que l'on envoie après nettoyage à un dispositif de refonte des ferrailles.

4. Procédé selon l'une quelconque des revendications 1 à 3, caractérisé en ce que la liqueur de flottation est constituée par une solution d'acide sulfurique dans l'eau à environ 40 % en poids ayant une densité de l'ordre de 1,4.

5. Procédé selon l'une quelconque des revendications 1 à 4, caractérisé en ce que l'on écume, lave avec une solution acide, notamment d'acide sulfurique et sèche la fraction légère avant de l'incinérer.

6. Procédé selon l'une quelconque des revendications 1 à 5, caractérisé en ce que, préalablement à son traitement à l'aide d'acide sulfurique, conjointement avec la liqueur de flottation, on lave la poudre à l'eau et on recueille une solution de lavage basique que l'on traite le cas échéant de façon à récupérer la potasse.

7. Procédé selon l'une quelconque des revendications 1 à 6, caractérisé en ce que l'on met en oeuvre le traitement du mélange de poudres à l'acide sulfurique en au moins deux étapes, à savoir :
   - une première étape de traitement à température ambiante par une solution d'acide sulfurique à environ 40 %,
   - et une seconde étape de traitement à chaud par de l'acide sulfurique concentré, le gâteau de filtration obtenu après filtration à l'issue de la première étape de traitement étant soumis à un lavage, et les solutions de filtration obtenues à l'issue des deux étapes de traitement étant rassemblées.

8. Procédé selon l'une quelconque des revendications 1 à 7, caractérisé en ce que l'on traite le gâteau de filtration par chauffage à environ 900 °C pendant une durée de l'ordre de 2 heures.

9. Procédé selon l'une quelconque des revendications 1 à 8, caractérisé en ce que, avant son traitement à l'aide d'acide sulfurique, conjointement avec la liqueur de flottation, on introduit la poudre dans le compartiment anodique d'une cellule d'électrolyse séparée en deux compartiments par un diaphragme poreux et on la soumet à une électrolyse, notamment dans une solution alcaline de sulfate d'ammonium de façon à séparer le manganèse présent dans la poudre, qui reste dans le compartiment anodique du zinc qui migre dans le compartiment cathodique, ces deux éléments étant ensuite envoyés séparément à l'étape de traitement à l'aide d'acide sulfurique.

10. Procédé selon l'une quelconque des revendications 1 à 9, caractérisé en ce que l'on soumet la fraction lourde obtenue à l'issue de l'étape de flottation à une dissolution anodique en milieu alcalin de façon à transférer le zinc présent dans cette fraction vers la cathode où il se dépose sous la forme d'une poudre immédiatement soluble dans l'acide sulfurique.

**Patentansprüche**

1. Verfahren zur Vernichtung von elektrischen Altbatterien und Wiedergewinnung der verschiedenen Komponenten, wie z.B. Salze und Metalle, insbesondere toxische Metalle, wie z.B. Quecksilber, dadurch gekennzeichnet, daß man:
   - die Batterien durch Schroten zerkleinert, wodurch man eine Schrotmischung erhält, deren Bestandteile eine Größe von kleiner als ungefähr 1 cm aufweisen,
   - die Schrotmischung einer Siebung unterwirft, um sie in Pulver und Granulat zu trennen,
   - das Granulat einer Schwimmaufbereitung unterwirft, um es in eine schwere und eine leichte Fraktion zu trennen,
   - das Pulver und die vorher aus der Schwimmaufbereitung erhaltene Flüssigkeit vereinigt und die so erhaltene Pulvermischung mit Schwefelsäure behandelt,
   - die so behandelte Pulvermischung einer Filtration unterwirft, wodurch man einen Filterkuchen und ein Filtrat erhält,
   - die nach dem Schwimmaufbereitungsschritt erhaltene schwere Fraktion mit einem aus konzentrierter Schwefel- und Salpetersäure bestehenden Mittel behandelt, wodurch man sie in eine Korrosionslösung und eine unlösliche Fraktion trennt,
- das Filtrat und die Korrosionslösung vereinigt und eine Säurelösung erhält, die man mit metallischem Kupfer behandelt, um die möglicherweise in der Lösung vorhandenen Metalle, die stärker elektropositiv sind als Kupfer, insbesondere Quecksilber und gegebenenfalls Silber und/oder [Lakune] galvanisch abzuscheiden,
- und die Metalle, insbesondere das abgeschiedene Quecksilber, wiedergewinnt.

2. Verfahren nach Anspruch 1, dadurch gekennzeichnet, daß man nach der Behandlung mit Kupfer und der Trennung der elektropositiven Metalle die Säurelösung einer Elektrolyse unterwirft, um im Anodenbereich Mangandioxid zu erhalten, und die so behandelte Lösung konzentriert, um das Zink in Form von Zinksulfatheptahydrat abzuscheiden.

3. Verfahren nach Anspruch 1 oder 2, dadurch gekennzeichnet, daß man vor Siebung der Schrotmischung die magnetischen Metallteile abtrennt und sie nach Reinigung einer Einrichtung zur Umschmelzung von Alteisen zuführt.

4. Verfahren nach einem der Ansprüche 1 bis 3, dadurch gekennzeichnet, daß die Flüssigkeit für die Schwimmaufbereitung aus einer wäßrigen Schwefelsäurelösung von ungefähr 40 Gew.-% und einer Dichte in der Größenordnung von 1,4 besteht.

5. Verfahren nach einem der Ansprüche 1 bis 4, dadurch gekennzeichnet, daß man die leichte Fraktion vor der Veraschung entschäumt, mit einer Säurelösung, insbesondere einer Schwefelsäurelösung, wäscht und trocknet.

6. Verfahren nach einem der Ansprüche 1 bis 5, dadurch gekennzeichnet, daß man das Pulver, bevor es gemeinsam mit der Flüssigkeit aus der Schwimmaufbereitung mit Schwefelsäure behandelt wird, mit Wasser wäscht und die basische Waschlösung auffängt, die man gegebenenfalls zur Wiedergewinnung von Kalium behandelt.

7. Verfahren nach einem der Ansprüche 1 bis 6, dadurch gekennzeichnet, daß man die Schwefelsäurebehandlung der Pulvermischung in mindestens zwei Schritten durchführt, nämlich:
- einem ersten Behandlungsschritt bei Umgebungstemperatur mit einer Schwefelsäurelösung von ungefähr 40%,
- und einem zweiten Behandlungsschritt bei hoher Temperatur mit konzentrierter Schwefelsäure, wobei der nach Filtration am Ende des ersten Behandlungsschritts erhaltene Filterkuchen einer Waschung unterworfen wird und die am Ende der beiden Behandlungsschritte erhaltenen Filtrate vereinigt werden.

8. Verfahren nach einem der Ansprüche 1 bis 7, dadurch gekennzeichnet, daß man den Filterkuchen in der Größenordnung von 2 Stunden auf ungefähr 900°C erhitzt.

9. Verfahren nach einem der Ansprüche 1 bis 8, dadurch gekennzeichnet, daß man das Pulver, bevor es gemeinsam mit der Flüssigkeit aus der Schwimmaufbereitung mit Schwefelsäure behandelt wird, in den Anodenbereich einer mittels einer durchlässigen Membran in zwei Bereiche geteilten Elektrolysezelle einbringt und es einer Elektrolyse unterwirft, insbesondere in einer alkalischen Ammonsulfatlösung, um das im Pulver vorhandene Magnesium, das im Anodenbereich verbleibt, vom Zink, das in den Kathodenbereich wandert, zu trennen, und diese beiden Elemente anschließend getrennt dem Behandlungsschritt zuführt, in dem sie mit Schwefelsäure behandelt werden.

10. Verfahren nach einem der Ansprüche 1 bis 9, dadurch gekennzeichnet, daß man die nach dem Schwimmaufbereitungsschritt erhaltene schwere Fraktion einem anodischen Aufschluß in einem alkalischen Medium unterwirft, um das in dieser Fraktion vorhandene Zink der Kathode zuzuführen, wo es sich in der Form eines Pulvers niederschlägt, das direkt in Schwefelsäure löslich ist.

## Claims

1. Process for destroying dead electrical batteries and for recovering various constituents such as salts and

metals, in particular toxic metals such as mercury, characterised in that:

- the batteries are broken by crushing so as to obtain a crushed mixture consisting of elements having a size of less than approximately 1 cm;
- the crushed mixture is sieved so as to divide it into a powder and granulated material;
- the granulated material is treated by flotation so as to divide it into a heavy fraction and a light fraction;
- the powder and the flotation liquor recovered beforehand are combined and the resultant powder mixture is treated with sulphuric acid;
- the powder mixture thus treated is filtered so as to separate a filtration cake from a filtration solution;
- the heavy fraction obtained at the end of the flotation stage in a sulphonitric medium is treated so as to divide it into an attacking solution and an insoluble fraction;
- the filtration solution and the attacking solution are combined in an acid solution which is treated with metallic copper so as to precipitate the metals which are more electropositive than copper and which may be present in the solution, in particular mercury and, possibly, silver, and/or by electrodeposition; and
- the metals, in particular the mercury precipitated, are recovered.

**2.** Process according to Claim 1, characterised in that, after treatment with copper and separation of the electropositive metals, the acid solution is subjected to electrolysis in order to recover manganese dioxide in the anode compartment; and the solution thus treated is concentrated so as to precipitate zinc in the heptahydrated sulphate form.

**3.** Process according to either of Claims 1 and 2, characterised in that the magnetic metal parts which, after cleaning, are sent to a scrap iron remelting device, are separated before the crushed mixture is sieved.

**4.** Process according to any one of Claims 1 to 3, characterised in that the flotation liquor consists of an approximately 40 % by weight aqueous sulphuric acid solution having a density of the order of 1.4.

**5.** Process according to any one of Claims 1 to 4, characterised in that the light fraction is skimmed, washed with an acid solution, in particular sulphuric acid, and dried before incineration.

**6.** Process according to any one of Claims 1 to 5, characterised in that, prior to its treatment with sulphuric acid, together with the flotation liquor, the powder is washed with water and a base washing solution is recovered which is treated, as necessary, so as to recover potash.

**7.** Process according to any one of Claims 1 to 6, characterised in that the treatment of the powder mixture with sulphuric acid is performed in at least two stages, i.e.:

- a first treatment stage at ambient temperature with an approximately 40% sulphuric acid solution; and
- a second treatment stage under heat with concentrated sulphuric acid, the filtration cake obtained after filtration at the end of the first treatment stage being subjected to washing, and the filtration solutions obtained at the end of the two treatment stages being combined.

**8.** Process according to any one of Claims 1 to 7, characterised in that the filtration cake is treated by heating to approximately 900°C for a duration of the order of 2 hours.

**9.** Process according to any one of Claims 1 to 8, characterised in that, prior to its treatment with sulphuric acid, together with the flotation liquor, the powder is introduced into the anode compartment of an electrolysis cell separated into two compartments by a porous diaphragm, and it is subjected to electrolysis, in particular in an alkaline solution of ammonium sulphate so as to separate the manganese present in the powder, which remains in the anode compartment, from the zinc which migrates into the cathode compartment, these two elements then being sent separately to the sulphuric acid treatment stage.

**10.** Process according to any one of Claims 1 to 9, characterised in that the heavy fraction obtained at the end of the flotation stage is subjected to anodic dissolution in an alkaline medium so as to transfer the zinc present in this fraction to the cathode where it is deposited in the form of a powder which is immediately soluble in sulphuric acid.